# EUROPÄISCHE PATENTSCHRIFT

(11) **EP 1 296 068 B1**
(45) Veröffentlichungstag und Bekanntmachung des Hinweises auf die Patenterteilung: **30.11.2005**
(21) Anmeldenummer: 02020735.3
(22) Anmeldetag: 14.09.2002
(51) Int. Cl.: F16B 11/00, F16B 5/06, C09J 5/06, B62D 25/20

(54) **Verfahren zum Fügen einer flächigen Struktur**
Method for jointing a sheet structure
Procédé de jonction d'une structure en feuille

(30) Priorität: 21.09.2001 DE 10146563
(43) Veröffentlichungstag der Anmeldung: 26.03.2003
(73) Patentinhaber: Bayerische Motoren Werke Aktiengesellschaft, 80809 München (DE)
(72) Erfinder: Stolz, Jochen, 80992 München (DE)

(56) Entgegenhaltungen:
- DE-A- 3 934 591
- DE-A- 4 126 009
- FR-A- 2 697 556

## Beschreibung

Die Erfindung betrifft ein Verfahren zum Fügen einer flächigen Struktur auf einem Strukturbauteil.

Im Fahrzeugbau verbreiten sich Verklebungen zusehends, da mit Verklebungen Bauteile auf einfache Weise miteinander verbunden werden können. Um bei einer Verklebung die Toleranzen so gering wie möglich zu halten, werden normalerweise die beiden zu fügenden Bauteile solange zueinander genau fixiert, bis der Klebstoff ausgehärtet ist. Diese Fixierung erfolgt meist durch Klemm- bzw. Spannvorrichtungen, Klammern oder ähnliches, die nachdem der Klebstoff zumindest größtenteils ausgehärtet ist, wieder entfernt werden müssen. (DE 4 126 009 A1).

Aufgabe der Erfindung ist es, ein Verfahren zum Fügen einer flächigen Struktur auf einem Strukturbauteil zu schaffen, bei dem keine Klemmen oder Klammern entfernt werden müssen, nachdem der Klebstoff zumindest größtenteils ausgehärtet ist.

Diese Aufgabe wird durch die Merkmale des Patentanspruchs 1 gelöst.

Kerngedanke der Erfindung ist es, dass zum Fügen einer flächigen Struktur auf einem Strukturbauteil zumindest folgende Schritte durchgeführt werden:
o Anbringen von zumindest einem Bolzen auf dem Strukturbauteil,
o Aufbringen von Klebstoff auf die Fügefläche zwischen der flächigen Struktur und dem Strukturbauteil,
o Fügen der flächigen Struktur mit dem Strukturbauteil, wobei die flächige Struktur mindestens eine Aussparung aufweist, durch die die flächige Struktur beim Fügen positioniert wird, indem der Bolzen die Aussparung durchsetzt,
o Fügen eines Fixierclipses über das freie Ende des Bolzens.

Der aufgebrachte Bolzen dient primär zur Positionierung der flächigen Struktur relativ zum Strukturbauteil und zum Verhindern eines ungewollten Verschiebens der beiden Bauteile zueinander bevor der Klebstoff ausreichend ausgehärtet ist. Deshalb ist die Form des Querschnitts des Bolzens unerheblich, solange die Aussparung zum Bolzen passend gestaltet ist. Der Bolzen kann beispielsweise einen runden, eckigen oder ovalen Querschnitt aufweisen. Ferner kann der Bolzen konisch gestaltet sein, um das Fügen zu erleichtern. Der Bolzen kann zum Beispiel angeschweißt oder angeklebt werden. Diese beiden Verfahren haben den Vorteil, dass die Struktur des Strukturbauteils nicht beschädigt wird und keine Späne, wie sie beim Bohren oder Gewindeschneiden entstehen können, anfallen. Der Fixierclip klemmt auf dem Bolzen zumindest in einer axialen Richtung und fixiert damit die flächige Struktur in axialer Richtung des Bolzens. Idealerweise ist der Fixierclip so gestaltet, dass er sich in einer Richtung leicht auf den Bolzen aufschieben lässt. Der Fixierclip wird auch nach dem Aushärten des Klebstoffs nicht mehr vom Bolzen abgezogen. Im Gegensatz zum Stand der Technik müssen also weder Klemmen oder Klammern noch der Fixierclip in einem zusätzlichen Arbeitsschritt nachträglich wieder entfernt werden, die ausschließlich zur gegenseitigen Fixierung der beiden zu fügenden Bauteile zueinander gedient haben. Dies ist insbesondere im Kraftfahrzeugbau ein großer Vorteil, da aufgrund der geringen Taktzeiten in der Fertigung und des hohen Kostendrucks eine möglichst effiziente Montage ohne unproduktive Arbeitsschritte erforderlich ist.

Ein Vorteil des erfindungsgemäßen Verfahrens besteht darin, dass die flächige Struktur und der Strukturbauteil aus unterschiedlichen Materialen bestehen können. Es können praktisch alle Metalle und Kunststoffe verwendet werden. Die Materialen müssen nicht unbedingt schweißbar oder verschraubbar sein. Beispielsweise Kunststoff lässt sich weder ordentlich schweißen noch aufgrund seines Setzverhaltens gut verschrauben. Bei der erfindungsgemäßen Verklebung ist nur entscheidend, dass die zu verklebenden und gegebenenfalls dafür vorbehandelten Fügeflächen eine feste Verbindung mit dem Klebstoff eingehen. Die flächige Struktur und der Strukturbauteil berühren sich nicht direkt, sie sind durch den Klebstofffilm voneinander getrennt. Damit muss bei der Materialwahl des Strukturbauteils und der flächigen Struktur auch keine mögliche Kontaktkorrosion der beiden Materialen berücksichtigt werden.

Viele Klebstoffe benötigen zur Aushärtung höhere Temperaturen, als normalerweise in einer Montagehalle herrschen. Daher durchlaufen frisch verklebte Bauteile häufig einen Aushärteofen, in dem die zum Aushärten notwendigen Temperaturen vorliegen. Auch bei Klebstoffen, die bei Raumtemperatur aushärten würden, wird häufig ein Aushärteofen zusätzlich eingesetzt, da die benötigte Aushärtezeit so erheblich reduziert werden kann. Vorteilhafterweise besteht der Fixierclip aus einem Material, das bei einer in einem Aushärteofen herrschenden Temperatur schmilzt, sodass dabei die Aussparung abgedichtet wird. Damit wird auf einfache Weise die einzige verbleibende Schwachstelle versiegelt. Die Gefahr, dass es in der Aussparung zu Korrosion kommt, ist damit gebannt.

Der Strukturbauteil ist günstigerweise Teil eines Space-frames eines Fahrzeugs. Auf dem Space-frame müssen mehrere flächige Außenhautteile befestigt werden. Das erfindungsgemäße Verfahren ist dazu besonders geeignet, da die Struktur des Space-frames dabei nicht beschädigt wird. Auch kann der Space-frame problemlos aus Aluminium bestehen, während die Außenhautteile beispielsweise aus Kunststoff oder aus Stahlblech sind. Aufgrund der Verklebung stellen die unterschiedlichen Materialen keine Hürde dar. Die flächige Struktur ist vorteilhafterweise ein Bodenblech eines Fahrzeugs.

Der Bolzen wird in einem besonders geeigneten Verfahren durch Bolzenschweißen auf dem Strukturbauteil angebracht. Das Bolzenschweiß-Verfahren ist besonders einfach und preiswert im Vergleich zu anderen Schweißverfahren. Auch ist die Gefahr von Verzug sehr gering, da weniger Wärme als bei anderen Schweißtechniken in den Strukturbauteil eingebracht werden muss.

In einer günstigen Ausgestaltung der Erfindung ist die flächige Struktur ein Sandwichbauteil. Sandwichbauteile weisen ein geringes Gewicht auf und spielen daher für den Leichtbau eine wichtige Rolle. Viele Sandwichbauteile können allerdings punktuell nicht so hoch belastet werden wie herkömmliche Bauteile. Die erfindungsgemäße flächige Verklebung bietet eine gute Möglichkeit, auch eine flächige Struktur aus einem Sandwichbauteil auf einfache Weise fest an einen Strukturbauteil anbinden zu können.

Die flächige Struktur ist idealerweise zumindest an der Fügefläche aus Edelstahl. Edelstahloberflächen zeichnen sich durch ihre hohe Korrosionsbeständigkeit aus. Allerdings können Edelstahlbauteile nicht bzw. nur sehr aufwendig verschweißt werden. Durch das Verfahren können dennoch auch flächige Strukturen mit einer Fügefläche aus Edelstahl problemlos mit einem Strukturbauteil verbunden werden.

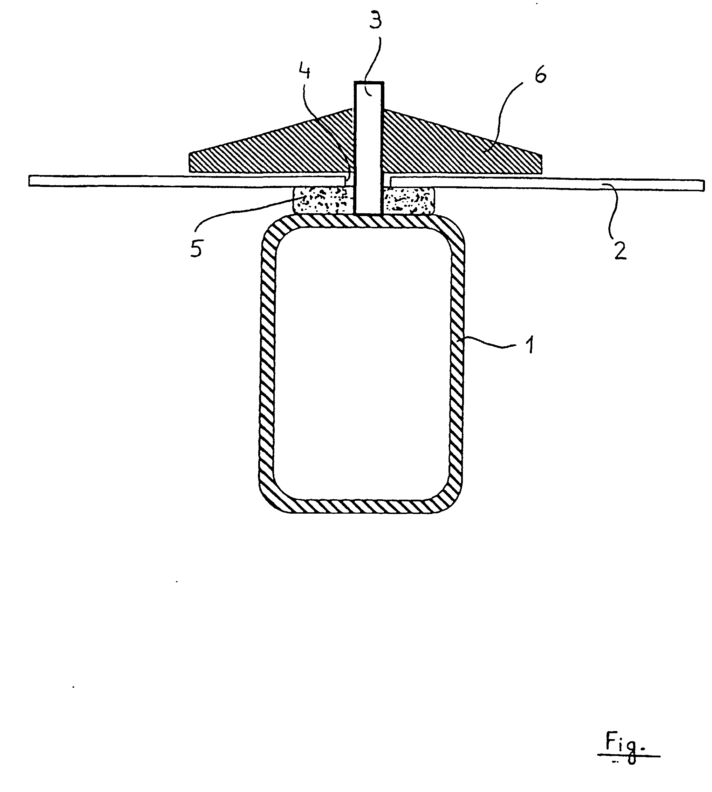

In der Zeichnung ist ein Ausführungsbeispiel der Erfindung dargestellt, das im folgenden näher beschrieben wird. Die einzige Figur zeigt in schematischer Darstellungsweise einen Schnitt durch eine flächige Struktur, die mit dem erfindungsgemäßen Verfahren auf einem rohrförmigen Strukturbauteil gefügt wurde.

In der Figur ist ein auf einem Stahlrohr 1 gefügtes Blech 2 dargestellt. Ein auf dem Stahlrohr 1 aufgeschweißter Bolzen 3 ragt durch eine Aussparung 4 im Blech 2 hindurch. Zwischen dem Stahlrohr 1 und dem Blech 2 befindet sich auf der Fügefläche Klebstoff 5. Auf dem Bolzen 3 befindet sich ein Fixierclip 6, der das Blech 2 in axialer Richtung des Bolzens 3 sichert.

Um den in der Figur dargestellten Verbund herzustellen, wird zunächst der Bolzen 3 im Bolzenschweißverfahren auf dem Stahlrohr 1 angeschweißt. Danach wird der Klebstoff 5 auf die Fügefläche auf dem Stahlrohr 1 aufgetragen. Anschließend wird das Blech 2 gefügt, wobei es durch die Aussparung 4 positioniert wird, durch die der Bolzen 3 hindurchragt. Damit kann das Blech 2 sich nicht mehr relativ zum Stahlrohr 1 verschieben. Um zu verhindern, dass sich das Blech 2 noch in axialer Richtung des Bolzens 3 bewegen kann, bevor der Klebstoff 5 zumindest im Wesentlichen ausgehärtet ist, wird ein Fixierclip 6 über den Bolzen 3 geschoben.

Der Fixierclip 6 klemmt dazu auf dem Bolzen 4 und liegt am Blech 2 an. Damit wird das Blech 2 in allen Richtungen gehalten.

Viele Klebstoffe 5 benötigen zur Verkürzung der Aushärtezeiten eine höhere Temperatur, als die Temperatur, die normalerweise in einer Montagehalle herrscht. Dazu dienen in der Praxis Aushärteöfen, in denen die frisch verklebten Teile zusammen mit dem Klebstoff 5 erwärmt werden. Wenn der Fixierclip 6 aus einem Material besteht, das bei diesen Aushärtetemperaturen bereits schmilzt, besteht die Möglichkeit, dass der Fixierclip 6 quasi in die Aussparung 4 fließt und so diese abdichtet. Die Fixierfunktion des Fixierclipses 6 ist dann nicht mehr erforderlich, da der Klebstoff 5 bereits ausreichend ausgehärtet ist, so dass das Blech 2 sich nicht mehr relativ zum Stahlrohr 1 verschieben kann.

Dieses Verfahren zum Fügen eines Blechs 2 auf einem Stahlrohr 1 hat gegenüber herkömmlichen Fügeverfahren, wie beispielsweise Verschrauben, Verschweißen, etc., den großen Vorteil, dass die Struktur des Stahlrohrs 1 nicht beschädigt wird und kein Verzug entsteht. Auch fallen keine Bohrspäne an, die eventuell in das Stahlrohr 1 fallen und dort zu unerwünschten Geräuschen führen könnten.

## Patentansprüche

1. Verfahren zum Fügen einer flächigen Struktur (**2**) auf einem Strukturbauteil (**1**) bestehend aus zumindest folgenden Schritten:
a) Anbringen von zumindest einem Bolzen (**3**) auf dem Strukturbauteil (**1**),
b) Aufbringen von Klebstoff (**5**) auf die Fügefläche zwischen der flächigen Struktur (**2**) und dem Strukturbauteil (**1**),
c) Fügen der flächigen Struktur (2) mit dem Strukturbauteil (**1**), wobei die flächige Struktur (**2**) mindestens eine Aussparung (**4**) aufweist, durch die die flächige Struktur (**2**) beim Fügen positioniert wird, indem der Bolzen (**3**) die Aussparung (**4**) durchsetzt,
d) Fügen eines Fixierclipses (**6**) über das freie Ende des Bolzens (**3**).

2. Verfahren nach Anspruch 1, **dadurch gekennzeichnet, dass** nach den Schritten a) bis d) ein weiterer Verfahrensschritt folgt:
e) Aushärten des Klebstoffs (**5**) in einem Aushärteofen.

3. Verfahren nach Anspruch 2, **dadurch gekennzeichnet, dass** der Fixierclip (**6**) aus einem Material besteht, das bei den Temperaturen im Aushärteofen schmilzt, sodass dabei die Aussparung (**4**) abgedichtet wird.

4. Verfahren nach einem der vorhergehenden Ansprüche, **dadurch gekennzeichnet, dass** der Strukturbauteil (**1**) Teil eines Space-frames eines Fahrzeugs ist.

5. Verfahren nach einem der vorhergehenden Ansprüche, **dadurch gekennzeichnet, dass** die flächige Struktur (**2**) ein Bodenblech eines Fahrzeugs ist.

6. Verfahren nach einem der vorhergehenden Ansprüche, **dadurch gekennzeichnet, dass** der Bolzen (**3**) durch Bolzenschweißen auf dem Strukturbauteil (1) angebracht wird.

7. Verfahren nach einem der vorhergehenden Ansprüche, **dadurch gekennzeichnet, dass** die flächige Struktur (**2**) ein Sandwichbauteil ist.

8. Verfahren nach einem der vorhergehenden Ansprüche, **dadurch gekennzeichnet, dass** die flächige Struktur (**2**) zumindest an der Fügefläche aus Edelstahl ist.

## Claims

1. A method of joining a flat structure (2) to a structural component (1) comprising at least the following steps:
a) attaching at least one bolt (3) to the structural component (1),
b) applying adhesive (5) to the joint surface between the flat structure (2) and the structural component (1),
c) joining the flat structure (2) to the structural component (1), wherein the flat structure (2) has at least one opening (4) for positioning the flat structure (2) during the joining process, in which the bolt (3) extends through the opening (4), and
d) fitting a fixing clip (6) over the free end of the bolt (3).

2. A method according to claim 1, **characterised in that** the steps a) to d) are followed by a further process step:
e) curing the adhesive (5) in a curing oven.

3. A method according to claim 2, **characterised in that** the fixing clip (6) is made of a material which melts at the temperatures in the curing oven and thus seals the opening (4).

4. A method according to any of the preceding claims, **characterised in that** the structural component (1) is part of a space-frame of a vehicle.

5. A method according to any of the preceding claims, **characterised in that** the flat structure (2) is a floor panel of a vehicle.

6. A method according to any of the preceding claims, **characterised in that** the bolt (3) is attached to the structural component (1) by bolt welding.

7. A method according to any of the preceding claims, **characterised in that** the flat structure (2) is a sandwich component.

8. A method according to any of the preceding claims, **characterised in that** the flat structure (2), at least at the joint surface, comprises stainless steel.

## Revendications

1. Procédé d'assemblage d'une structure plane (2) sur une pièce structurée (1) comportant au moins les étapes suivantes :
a) mise en place d'au moins un boulon (3) sur la pièce structurée (1),
b) application de colle (5) sur la face d'assemblage entre la structure plane (2) et la pièce structurée (1),
c) assemblage de la structure plane (2) avec la pièce structurée (1), la structure plane (2) présentant au moins un évidement (4) à travers lequel elle est positionnée lors de l'assemblage alors que le boulon (3) traverse l'évidement (4), et
d) assemblage d'un clip d'immobilisation (6) au-dessus de l'extrémité libre du boulon (3).

2. Procédé selon la revendication 1,
**caractérisé en ce qu'**
après les étapes de a) à d), il y a une autre étape :
e) durcissement de la colle (5) dans un four de durcissement.

3. Procédé selon la revendication 2,
**caractérisé en ce que**
le clip d'immobilisation (6) est constitué d'une matière qui fond aux températures régnant dans le four de durcissement de sorte que l'évidement (4) est alors colmaté.

4. Procédé selon l'une quelconque des revendications précédentes,
**caractérisé en ce que**
la pièce structurée (1) est une pièce du châssis d'un véhicule.

5. Procédé selon l'une quelconque des revendications précédentes,
**caractérisé en ce que**
la structure plane (2) est une tôle de plancher d'un véhicule.

6. Procédé selon l'une quelconque des revendications précédentes,
**caractérisé en ce que**
le boulon (3) est placé sur la pièce structurée (1) par soudage à l'arc avec percussion.

7. Procédé selon l'une quelconque des revendications précédentes,
**caractérisé en ce que**
la structure plane (2) est une pièce sandwich.

8. Procédé selon l'une quelconque des revendications précédentes,
**caractérisé en ce que**
la structure plane (2) est en acier inoxydable, du moins sur la face d'assemblage.
